# EUROPEAN PATENT APPLICATION

(11) **EP 4 258 445 A1**
(43) Date of publication of application: **11.10.2023**
(21) Application number: 22718040.3
(22) Date of filing: 25.02.2022
(51) Int. Cl.: H01M 50/291, H01M 50/209, H01M 50/233, H01M 50/271, H01M 10/6556

(54) **BATTERY, ELECTRICAL DEVICE, AND METHOD AND DEVICE FOR PREPARING BATTERY**

(71) Applicant: Contemporary Amperex Technology Co., Limited, Jiaocheng District Ningde City, Fujian 352100 (CN)
(72) Inventor: SUN, Zhanyu, Ningde, Fujian 352100 (CN); CHEN, Xingdi, Ningde, Fujian 352100 (CN); LONG, Chao, Ningde, Fujian 352100 (CN); WANG, Peng, Ningde, Fujian 352100 (CN); ZHENG, Chenling, Ningde, Fujian 352100 (CN)
(74) Representative: Herrero & Asociados, S.L.
(86) International application number: PCT/CN2022/077998
(87) International publication number: WO 2023/159487

(57) **Abstract**

A battery, a power consumption device, and a method and device for producing a battery are provided. The battery incudes: a plurality of battery cells arranged in a first direction; and a mounting wall, the mounting wall being connected to a first wall of each battery cell of the plurality of battery cells, where when the battery cell is disposed in a power consumption device, the battery cell is located below the mounting wall, and the mounting wall is configured to mount the battery cell; where a relationship between a size H of the mounting wall in a second direction and a weight M of the battery cell satisfies: 0.04mm/kg≤H/M≤100mm/kg, and the second direction is perpendicular to the first wall. Technical solutions of embodiments of the present application could improve performance of a battery.

## Description

### TECHNICAL FIELD

The present application relates to the field of battery technologies, and in particular, to a battery, a power consumption device, and a method and device for producing a battery.

### BACKGROUND

With the increasing environmental pollution, the new energy industry has attracted more and more attention. In the new energy industry, the battery technology is an important factor related to its development.

A space utilization ratio of an interior of a battery affects structural strength and energy density of the battery, which further affects performance of the battery. Therefore, how to improve the performance of the battery is an urgent technical problem to be solved in the battery technology.

### SUMMARY

The present application provides a battery, a power consumption device, and a method and device for producing a battery, which could improve structural strength and energy density of the battery, thereby improving performance of the battery.

In a first aspect, a battery is provided, including: a plurality of battery cells arranged in a first direction; and a mounting wall, the mounting wall being connected to a first wall of each battery cell of the plurality of battery cells, where when the battery cell is disposed in a power consumption device, the battery cell is located below the mounting wall, and the mounting wall is configured to mount the battery cell; where a relationship between a size H of the mounting wall in a second direction and a weight M of the battery cell satisfies: 0.04mm/kg≤H/M≤100mm/kg, and the second direction is perpendicular to the first wall.

In an embodiment of the present application, a first wall of each battery cell of a plurality of battery cells arranged in a first direction is connected to a mounting wall, and when the battery cell is disposed in a power consumption device, the battery cell is located below the mounting wall, and the mounting wall is configured to mount the battery cell; where a relationship between a size H of the mounting wall in a second direction and a weight M of the battery cell satisfies: 0.04mm/kg≤H/M≤100mm/kg, and the second direction is perpendicular to the first wall. In this way, the first wall of the battery cell is directly connected to the mounting wall, and no space needs to be left between the first wall and the mounting wall, so that a space utilization ratio of the battery can be improved, thereby improving energy density of the battery, and meanwhile, the battery cell and the mounting wall are connected as a whole, so that structural strength of the battery can be improved. The weight M of the battery cell and the size H of the mounting wall in the second direction satisfy 0.04mm/kg≤H/M≤100mm/kg, which can not only keep the size H of the mounting wall in the second direction within a reasonable range, thereby avoiding waste of the internal space of the battery due to the excessive H, but also enable connection between the battery cell and the mounting wall to be firmer, thereby enhancing the structural strength of the battery. Therefore, a technical solution of the embodiment of the present application could improve the performance of the battery.

In a possible implementation manner, a second wall of the battery cell is provided with an electrode terminal, and the second wall and the first wall are separated and disposed opposite to each other in the second direction; or the second wall is connected to the first wall, and the second direction is parallel to the second wall. In this way, the first wall that is not provided with the electrode terminal may be directly connected to the mounting wall, and the battery cell and the mounting wall are connected as a whole, which enhances overall structural strength of the battery, and meanwhile, there is no need to leave a gap between the first wall and the mounting wall, which improves the space utilization ratio of the battery, and further improves the energy density of the battery.

In a possible implementation manner, the size H of the mounting wall in the second direction is 0.2mm to 20mm. In this way, the size of the mounting wall in the second direction may be flexibly selected according to the weight M of the battery cell or a corresponding suitable battery cell may be selected according to the size of the mounting wall in the second direction.

In a possible implementation manner, an inner portion of the mounting wall is provided with a cavity. In this way, the cavity may provide an expansion space for the battery cell.

In a possible implementation manner, the cavity is configured to accommodate a fluid to adjust a temperature of the battery cell.

In a possible implementation manner, the battery further includes a reinforcing rib, and the reinforcing rib is disposed on a surface of the mounting wall away from the battery cell in the second direction. In this way, the structural strength of the mounting wall can be enhanced.

In a possible implementation manner, the reinforcing rib and the mounting wall are of an integrally formed structure. In this way, the processing is convenient, which is advantageous in saving the process.

In a possible implementation manner, the relationship between the size H of the mounting wall in the second direction and the weight M of the battery cell further satisfies: 0.1mm/kg≤H/M≤20mm/kg. In this way, the battery does not catch fire and explode, and the safety of the battery can be better ensured while satisfying the energy density of the battery.

In a possible implementation manner, the battery further includes: a spacer plate, the spacer plate extending in the first direction and being connected to a third wall of each battery cell of the plurality of battery cells, the third wall being two opposite walls of the battery cell in a third direction, and the third direction being perpendicular to the first direction and the second direction. In this way, no side plate may be provided in the battery, and there is no need to provide a structure such as, a beam, or the like, which can greatly improve the space utilization ratio of the interior of the battery, and improve the structural strength and the energy density of the battery.

In a possible implementation manner, the third wall is a wall of the battery cell that has a largest surface area. In this way, connecting strength of the spacer plate and the battery cell can be enhanced.

In a possible implementation manner, a size of the spacer plate in the third direction is 0.1mm to 100mm. In this way, it is possible to give consideration to the strength of the spacer plate as well as the energy density of the battery.

In a possible implementation manner, the battery includes multiple columns of the plurality of battery cells arranged in the first direction and a plurality of spacer plates, where the multiple columns of the battery cells and the plurality of spacer plates are alternately disposed in the third direction. In this way, the multiple columns of the battery cells and the plurality of spacer plates are connected to each other as a whole, and accommodated in a box, which can further ensure the overall structural strength of the battery, and improve the performance of the battery.

In a possible implementation manner, the battery includes a plurality of battery modules, the battery module includes at least one column of the plurality of battery cells arranged in the first direction and at least one spacer plate, and the at least one column of the battery cells and the at least one spacer plate are alternately disposed in the third direction.

In a possible implementation manner, the battery module includes N columns of the battery cells and N-1 spacer plate(s), the spacer plate is disposed between two adjacent columns of the battery cells, and N is an integer greater than 1. In this way, the number of spacer plates can be reduced, and the energy density of the battery can be improved.

In a possible implementation manner, the plurality of battery modules are arranged in the third direction and a gap exists between adjacent battery modules. In this way, an expansion space may be provided for the battery cell.

In a possible implementation manner, an end portion of the spacer plate in the first direction is provided with a fixing structure, and the spacer plate is fixed to the mounting wall via the fixing structure. In this way, the structural strength of the battery is further improved.

In a possible implementation manner, the spacer plate is bonded to the third wall. In this way, the battery has a simple structure and is easy to process and assemble.

In a possible implementation manner, the first wall is bonded to the mounting wall. This connecting manner facilitates installation.

In a second aspect, a power consumption device is provided, including the battery in the foregoing first aspect or any possible implementation manner of the first aspect, the battery being configured to provide electric energy.

In a third aspect, a method for producing a battery is provided, including: providing a plurality of battery cells arranged in a first direction; and providing a mounting wall, the mounting wall being connected to a first wall of each battery cell of the plurality of battery cells, where when the battery cell is disposed in a power consumption device, the battery cell is located below the mounting wall, and the mounting wall is configured to mount the battery cell; where a relationship between a size H of the mounting wall in a second direction and a weight M of the battery cell satisfies: 0.04mm/kg≤H/M≤100mm/kg, and the second direction is perpendicular to the first wall.

In a fourth aspect, a device for producing a battery is provided, including a module for executing the method in the foregoing third aspect.

In an embodiment of the present application, a first wall of each battery cell of a plurality of battery cells arranged in a first direction is connected to a mounting wall, and when the battery cell is disposed in a power consumption device, the battery cell is located below the mounting wall, and the mounting wall is configured to mount the battery cell; where a relationship between a size H of the mounting wall in a second direction and a weight M of the battery cell satisfies: 0.04mm/kg^H/M^ 100mm/kg, and the second direction is perpendicular to the first wall. In this way, the first wall of the battery cell is directly connected to the mounting wall, and no space needs to be left between the first wall and the mounting wall, so that the space utilization ratio of the battery can be improved, thereby improving energy density of the battery, and meanwhile, the battery cell and the mounting wall are connected as a whole, so that structural strength of the battery can be improved. The weight M of the battery cell and the size H of the mounting wall in the second direction satisfy 0.04mm/kg*≤*,H/M*≤*, 100mm/kg, which can not only keep the size H of the mounting wall in the second direction within a reasonable range, thereby avoiding waste of an internal space of the battery due to the excessive H, but also enable connection between the battery cell and the mounting wall to be firmer, thereby enhancing the structural strength of the battery. Therefore, a technical solution of the embodiment of the present application could improve the performance of the battery.

### BRIEF DESCRIPTION OF THE DRAWINGS

To describe technical solutions in embodiments of the present application more clearly, the following briefly introduces accompanying drawings required for describing the embodiments of the present application. Apparently, the accompanying drawings in the following description are only some embodiments of the present application, and a person of ordinary skill in the art may still derive other drawings from the accompanying drawings without creative efforts.
FIG. 1 is a schematic diagram of a vehicle according to an embodiment of the present application;
FIG. 2 is a schematic diagram of a battery according to an embodiment of the present application;
FIG. 3 is a schematic diagram of a battery cell according to an embodiment of the present application;
FIG. 4 is a schematic diagram of a battery according to an embodiment of the present application;
FIG. 5 is a schematic diagram of a mounting wall according to an embodiment of the present application;
FIG. 6 is a schematic diagram of a mounting wall according to an embodiment of the present application;
FIG. 7 is a schematic diagram of a mounting wall according to an embodiment of the present application;
FIG. 8 is a schematic diagram of a mounting wall according to an embodiment of the present application;
FIG. 9 is a schematic diagram of a mounting wall according to an embodiment of the present application;
FIG. 10 is a schematic diagram of a battery according to an embodiment of the present application;
FIG. 11 is a schematic diagram of a battery according to an embodiment of the present application;
FIG. 12 is a schematic diagram of a battery module according to an embodiment of the present application;
FIG. 13 is a schematic diagram of mating of a battery cell with a spacer plate according to an embodiment of the present application;
FIG. 14 is a schematic diagram of mating of a battery cell with a spacer plate according to an embodiment of the present application;
FIG. 15 is a schematic diagram of mating of a battery cell with a spacer plate according to an embodiment of the present application;
FIG. 16 is a schematic diagram of a method for producing a battery according to an embodiment of the present application; and
FIG. 17 is a schematic diagram of a device for producing a battery according to an embodiment of the present application.

In the accompanying drawings, the drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise illustrated, all technical and scientific terms used have the same meanings as those commonly understood by a person skilled in the art to which the present application belongs. The used terms are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions; "a plurality of" means more than two; and orientations or positional relationships indicated by terms such as "up", "down", "left", "right", "inside", and "outside" are merely for convenience of describing the present application and for simplifying the description, rather than for indicating or implying that an indicated apparatus or element must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The phrase "embodiments" referred to in the present application means that the descriptions of specific features, structures, and characteristics in combination with the embodiments are included in at least one embodiment of the present application. The phrase at various locations in the specification does not necessarily refer to the same embodiment, or an independent or alternate embodiment that is mutually exclusive from another embodiment. A person skilled in the art should explicitly and implicitly understand that the embodiments described in the present application may be in combination with another embodiment.

The terms representing directions in the following description are all directions shown in the drawings, and do not limit the specific structure of the present application. In the description of the present application, it should be further noted that, unless explicitly specified and defined otherwise, terms "installation", "interconnection", and "connection" should be understood in a broad sense, for example, they may be a fixed connection, a detachable connection, or an integrated connection; may be a direct connection and may also be an indirect connection via an intermediate medium, or may be communication between the interiors of two elements. A person of ordinary skill in the art may understand the specific meanings of the foregoing terms in the present application according to specific conditions.

In the present application, the term "and/or" is only an association relation describing associated objects, which means that there may be three relations. For example, A and/or B may represent three situations: A exists, both A and B exist, and B exists. In addition, the character "/" in the present application generally indicates that the associated objects before and after the character are in an "or" relation.

In the present application, a battery cell may include a lithium-ion secondary battery cell, a lithium-ion primary battery cell, a lithium-sulfur battery, a sodium lithium-ion battery, a sodium-ion battery, a magnesium-ion battery, or the like, which is not limited in the embodiments of the present application. The battery cell may be cylindrical, flat, cuboid or in other shapes, which is also not limited in the embodiments of the present application. The battery cell is generally divided into three types according to the way of packaging: a cylindrical battery cell, a prismatic battery cell and a pouch battery cell, which is also not limited in the embodiments of the present application.

A battery mentioned in the embodiments of the present application refers to a single physical module that includes one or more battery cells to provide a higher voltage and capacity. For example, the battery mentioned in the present application may include a battery pack, or the like. The battery generally includes a box for enclosing one or more battery cells. The box can avoid liquid or other foreign matters to affect charging or discharging of the battery cell.

The battery cell includes an electrode assembly and an electrolytic solution, and the electrode assembly includes a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer. The positive electrode active material layer is coated on a surface of the positive electrode current collector, the current collector not coated with the positive electrode active material layer protrudes from the current collector coated with the positive electrode active material layer, and the current collector not coated with the positive electrode active material layer serves as a positive tab. In an example of a lithium-ion battery, a material of the positive electrode current collector may be aluminum, and a positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer serves as a negative tab. A material of the negative electrode current collector may be copper, and a negative electrode active material may be carbon, silicon, or the like. In order to ensure that no fusing occurs when a large current passes, there are a plurality of positive tabs which are stacked together, and there are a plurality of negative tabs which are stacked together. A material of the separator may be polypropylene (PP) or polyethylene (PE), or the like. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, the plurality of battery cells may be first connected in series, in parallel or in series and parallel to constitute a battery module, and then a plurality of battery modules are connected in series, in parallel or in series and parallel to constitute the battery. That is, the plurality of battery cells may directly constitute the battery, or may first constitute a battery module, and then battery modules constitute the battery. The battery is further disposed in a power consumption device to provide electric energy for the power consumption device.

With the development of the battery technology, it is necessary to consider design factors in multiple aspects simultaneously, such as energy density, cycle life, discharge capacity, C-rate, safety, or the like. When the internal space of the battery is certain, improving the space utilization ratio of the interior of the battery is an effective means for improving the energy density of the battery. However, while improving the space utilization ratio of the interior of the battery, other performance parameters of the battery, for example, the structural strength of the battery, etc. should also be considered.

In view of this, an embodiment of the present application provide a technical solution, a first wall of each battery cell of a plurality of battery cells arranged in a first direction is connected to a mounting wall, and when the battery cell is disposed in a power consumption device, the battery cell is located below the mounting wall, and the mounting wall is configured to mount the battery cell; where a relationship between a size H of the mounting wall in a second direction and a weight M of the battery cell satisfies: 0.04mm/kg≤H/M≤100mm/kg, and the second direction is perpendicular to the first wall. In this way, the first wall of the battery cell is directly connected to the mounting wall, and no space needs to be left between the first wall and the mounting wall, so that the space utilization ratio of the battery can be improved, thereby improving energy density of the battery, and meanwhile, the battery cell and the mounting wall are connected as a whole, so that structural strength of the battery can be improved. The weight M of the battery cell and the size H of the mounting wall in the second direction satisfy 0.04mm/kg≤H/M≤100mm/kg, which can not only keep the size H of the mounting wall in the second direction within a reasonable range, thereby avoiding waste of an internal space of the battery due to the excessive H, but also enable connection between the battery cell and the mounting wall to be firmer, thereby enhancing the structural strength of the battery. Therefore, a technical solution of the embodiment of the present application could improve the performance of the battery.

The technical solutions described in the embodiments of the present application are all applicable to various apparatuses using batteries, such as mobile phones, portable devices, notebook computers, electromobiles, electric toys, electric tools, electric vehicles, ships and spacecrafts. For example, the spacecrafts include airplanes, rockets, space shuttles, spaceships, or the like.

It should be understood that the technical solutions described in the embodiments of the present application are not only applicable to the devices described above, but also applicable to all devices using batteries. However, for brief description, the following embodiments are all described by an example of an electric vehicle.

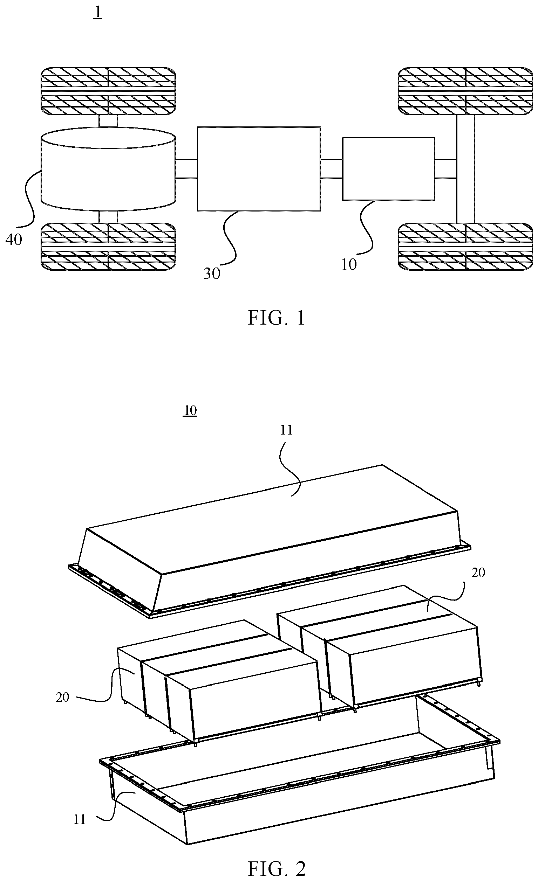

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. The vehicle 1 may be internally provided with a motor 40, a controller 30 and a battery 10, and the controller 30 is configured to control the battery 10 to supply power to the motor 40. For example, the battery 10 may be disposed at the bottom, head or tail of the vehicle 1. The battery 10 may be used for power supply to the vehicle 1. For example, the battery 10 may serve as an operation power source of the vehicle 1 for a circuit system of the vehicle 1, for example, for a working power demand of the vehicle 1 during startup, navigation and running. In another embodiment of the present application, the battery 10 may serve not only as an operation power source of the vehicle 1, but also as a driving power source of the vehicle 1, replacing or partially replacing fuel or natural gas to provide driving power for the vehicle 1.

In order to meet different power demands, the battery 10 may include a plurality of battery cells. For example, as shown in FIG. 2, FIG. 2 is a schematic structural diagram of a battery 10 according to an embodiment of the present application, and the battery 10 may include a plurality of battery cells 20. The battery 10 may further include a box 11 with the interior thereof being a hollow structure, and the plurality of battery cells 10 are accommodated in the box 11. For example, the plurality of battery cells 20 are combined in parallel connection or series connection or series-parallel connection and then placed in the box 11.

Optionally, the battery 10 may further include other structures, which will not be repeated redundantly herein. For example, the battery 10 may further include a bus component. The bus component is configured to implement electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box. Optionally, the electrically conductive mechanism may also belong to the bus component.

According to different power demands, the number of battery cells 20 may be set to any value. The plurality of battery cells 20 may be connected in series, in parallel or in series and parallel to implement larger capacity or power. Since there may be many battery cells 20 included in each battery 10, the battery cells 20 are arranged in groups for convenience of installation, and each group of battery cells 20 constitutes a battery module 200. The number of battery cells 20 included in the battery module 200 is not limited and may be set according to demands. A battery may include a plurality of battery modules, and these battery modules may be connected in series, in parallel or in series and parallel.

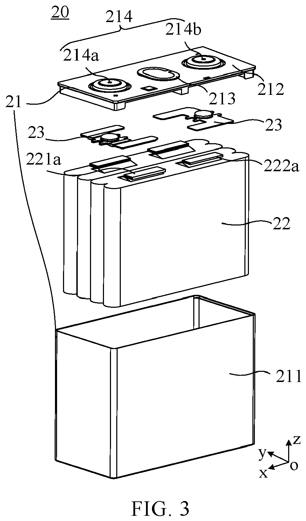

As shown in FIG. 3, FIG. 3 is a schematic structural diagram of a battery cell 20 according to an embodiment of the present application. The battery cell 20 includes one or more electrode assemblies 22, a housing 211 and a cover plate 212. The housing 211 and the cover plate 212 form a shell or battery case 21. A wall of the housing 211 and the cover plate 212 each are referred to as a wall of the battery cell 20, where for a cuboid-shaped battery cell 20, the wall of the housing 211 includes a bottom wall and four side walls. The housing 211 is shaped according to a shape of the one or more combined electrode assemblies 22. For example, the housing 211 may be a hollow cuboid or cube or cylinder, and one face of the housing 211 has an opening, so that the one or more electrode assemblies 22 may be placed in the housing 211. For example, when the housing 211 is a hollow cuboid or cube, one plane of the housing 211 is an opening face, that is, the plane does not have a wall, so that an inside and outside of the housing 211 are in communication with each other. When the housing 211 may be a hollow cylinder, an end face of the housing 211 is an opening face, that is, the end face does not have a wall, so that an inside and outside of the housing 211 are in communication with each other. The cover plate 212 covers the opening and is connected to the housing 211 to form a closed cavity in which the electrode assemblies 22 are placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a positive electrode terminal 214a and a negative electrode terminal 214b, respectively. Each electrode terminal 214 is correspondingly provided with a connecting member 23, or may be referred to as a bus component 23, which is located between the cover plate 212 and the electrode assembly 22 and configured to electrically connect the electrode assembly 22 to the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of the one or more electrode assemblies 22 is connected to one electrode terminal through one connecting member 23, and the second tab 222a of the one or more electrode assemblies 22 is connected to the other electrode terminal through the other connecting member 23. For example, the positive electrode terminal 214a is connected to the positive tab through one connecting member 23, and the negative electrode terminal 214b is connected to the negative tab through the other connecting member 23.

In this battery cell 20, according to actual use demands, the electrode assembly 22 may be set to be single or multiple in number. As shown in FIG. 3, four independent electrode assemblies 22 are disposed in the battery cell 20.

A pressure relief mechanism 213 may be disposed on the battery cell 20. The pressure relief mechanism 213 is configured to be actuated when an internal pressure or temperature of the battery cell 20 reaches a threshold, to relieve the internal pressure or temperature.

The pressure relief mechanism 213 may be in various possible pressure relief structures, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being fractured when an internal gas pressure of the battery cell 20 provided with the pressure relief mechanism 213 reaches a threshold.

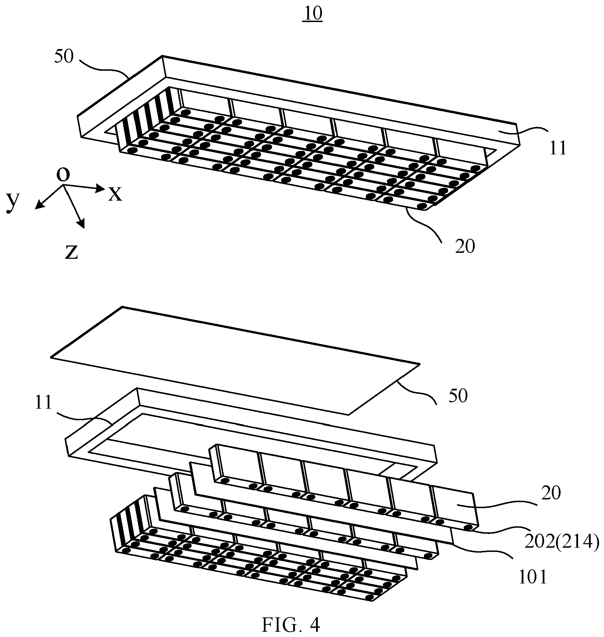

FIG. 4 is a schematic structural diagram of a battery according to an embodiment of the present application. As shown in FIG. 4, a battery 10 includes a plurality of battery cells 20 arranged in a first direction and a mounting wall 50. The mounting wall 50 is connected to a first wall 201 of each battery cell 20 of the plurality of battery cells 20. When the battery cell 20 is provided in a power consumption device, the battery cell 20 is located below the mounting wall 50, and the mounting wall 50 is configured to mount the battery cell 20. A relationship between a size H of the mounting wall 50 in a second direction and a weight M of the battery cell 20 satisfies: 0.04mm/kg≤H/M≤100mm/kg, and the second direction is perpendicular to the first wall 201.

The battery 10 includes a plurality of battery cells 20 arranged in a first direction, where the first direction may be the x-direction. The size H of the mounting wall 50 in the second direction may be a thickness of the mounting wall 50 in the second direction, where the second direction may be the z-direction.

The mounting wall 50 may be an upper cover of a box of a battery or may be part of a power consumption device, such as a chassis of a vehicle. When the mounting wall 50 is the chassis of the vehicle, the battery cell 20 is connected to the mounting wall 50, that is, the battery cell 20 is connected to a chassis face of the vehicle. The battery cell 20 is directly connected to the chassis face of the vehicle, and in this way, there is no need to provide the upper cover of the box of the battery, which saves the space occupied by the upper cover of the box of the battery, and improves the space utilization ratio of the battery, thereby improving the energy density of the battery.

The mounting wall 50 is connected to a first wall 201 of each of the plurality of battery cells 20, where the first wall 201 is parallel to a first direction and a second direction is perpendicular to the first wall 201, that is, the second direction is perpendicular to the first direction. In this way, the mounting wall 50 is in direct surface contact with the battery cell 20, and no gap is provided between the mounting wall 50 and the battery cell 20, which can save the space of the battery. Meanwhile, the two are brought into face contact, and thus connected as whole, thereby improving the structural strength of the battery.

The mounting wall 50 is configured to mount the battery cell 20, and when the battery cell 20 is disposed in the power consumption device, the battery cell 20 is located below the mounting wall 50. At this time, the first wall 201 of the battery cell 20 is connected to a bottom face of the mounting wall 50, the bottom face of the mounting wall 50 may be a face close to the battery cell 20 in the second direction, and the first wall 201 may be a face of the battery cell 20 close to the mounting wall 50 in the second direction.

Optionally, the first wall 201 is a wall of the battery cell 20 that has a largest surface area, and in this way, a contact area between the mounting wall 50 and the battery cell 20 is large, which can ensure the connecting strength between the mounting wall 50 and the battery cell 20. In other embodiments, the mounting wall 50 may also be connected to a wall of battery cell 20 that has a small surface area, which is not limited in the embodiments of the present application.

A relationship between a size H of the mounting wall 50 in a second direction and a weight M of the battery cell 20 satisfies: 0.04mm/kg≤H/M≤100mm/kg.

When H/M>100mm/kg, the size H of the mounting wall 50 in the second direction is large, although such a battery has greater structural strength, the mounting wall 50 occupies a large space, thereby resulting in a decrease in the space utilization ratio of the interior of the battery and a decrease in the energy density of the battery 10.

When H/M<0.04mm/kg, the mounting wall 50 cannot meet requirements of the structural strength of the battery, and during the use of the battery, the mounting wall 50 may be deformed in a gravity direction or even broken, and the battery cell 20 may also be detached from the mounting wall 50, and safety accidents such as fire and explosion may occur.

In an embodiment of the present application, a first wall 201 of each battery cell 20 of a plurality of battery cells 20 arranged in a first direction is connected to a mounting wall 50, and when the battery cell 20 is disposed in a power consumption device, the battery cell 20 is located below the mounting wall 50, and the mounting wall 50 is configured to mount the battery cell 20; where a relationship between a size H of the mounting wall 50 in a second direction and a weight M of the battery cell 20 satisfies: 0.04mm/kg≤H/M≤100mm/kg, and the second direction is perpendicular to the first wall. In this way, the first wall 201 of the battery cell 20 is directly connected to the mounting wall 50, and no space needs to be left between the first wall and the mounting wall, so that a space utilization ratio of the battery 10 can be improved, thereby improving energy density of the battery 10, and meanwhile, the battery cell 20 and the mounting wall 50 are connected as a whole, so that structural strength of the battery 10 can be improved. The weight M of the battery cell 20 and the size H of the mounting wall 50 in the second direction satisfy 0.04mm/kg≤H/M≤100mm/kg, which can not only keep the size H of the mounting wall 50 in the second direction within a reasonable range, thereby avoiding waste of the internal space of the battery 10 due to the excessive H, but also enable connection between the battery cell 20 and the mounting wall 50 to be firmer, thereby enhancing the structural strength of the battery 10. Therefore, a technical solution of the embodiment of the present application could improve the performance of the battery 10.

Optionally, in an embodiment of the present application, a second wall 202 of the battery cell 20 is provided with an electrode terminal 214, and the second wall 202 and the first wall 201 are separated and disposed opposite to each other in the second direction; or the second wall 202 is connected to the first wall 201, and the second direction is parallel to the second wall 202.

When the battery cell 20 is in a use state, the second direction may be parallel to the gravity direction, and the electrode terminals 214 may be toward the ground in the gravity direction. For example, the battery 10 includes a mounting wall 50 and a box, the box is located below the mounting wall 50, the first wall 201 is toward the mounting wall 50 and connected to the mounting wall 50, the second wall 202 is toward a bottom portion of the box, and the electrode terminal 214 is also toward the bottom portion of the box, that is, toward the ground. In this way, the first wall 201 that is not provided with the electrode terminal 214 may be directly connected to the mounting wall 50, and the battery cell 20 and the mounting wall 50 are connected as a whole, which enhances overall structural strength of the battery 10, and meanwhile, there is no need to leave a gap between the first wall 201 and the mounting wall 50, which improves the space utilization ratio of the battery, and further improves the energy density of the battery 10.

Optionally, the electrode terminal 214 may also be disposed on one of two walls of the battery cells 20 that are disposed opposite to each other in the first direction, that is, the second wall 202 is connected to the first wall 201, and the second direction is parallel to the second wall 202. For example, electrode terminals 214 of a same column of the battery cells 20 arranged in the first direction are also arranged in the first direction.

Optionally, in an embodiment of the present application, the size H of the mounting wall 50 in the second direction is 0.2mm to 20mm. Optionally, the weight M of the battery cell 20 is 1kg to 10kg. In this way, the size of the mounting wall 50 in the second direction may be flexibly selected according to the weight M of the battery cell 20 or a corresponding suitable battery cell 20 may be selected according to the size of the mounting wall 50 in the second direction.

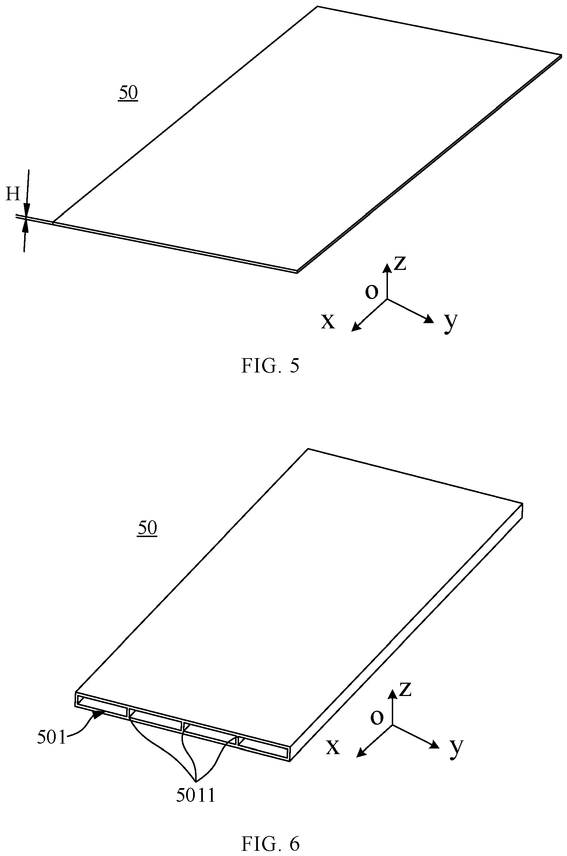

FIG. 5 is a schematic structural diagram of a mounting wall according to an embodiment of the present application. Optionally, as shown in FIG. 5, the mounting wall 50 may be of a plate-like structure, for example, a flat plate. In the plate-like structure, as long as a surface of the mounting wall 50 in contact with the first wall 201 may be a plane, other aspects are not specifically limited.

FIG. 6 is a schematic structural diagram of a mounting wall according to an embodiment of the present application. Optionally, as shown in FIG. 6, in an embodiment of the present application, an inner portion of the mounting wall 50 is provided with a cavity. The cavity 501 may, on the one hand, provide an expansion space for the battery cell 20, and on the other hand, may also serve as a flow channel to accommodate a fluid, to adjust a temperature of the battery cell 20.

Optionally, an interior of the cavity 501 may be provided with a reinforcing plate 5011, and the reinforcing plate 5011 may extend in a first direction. On the one hand, the reinforcing plate 5011 may enhance the structural strength of the mounting wall 50, and on the other hand, the inner portion of the mounting wall 50 may be provided with a plurality of flow channels by the reinforcing plate 5011, and the plurality of flow channels are configured to accommodate the fluid, and may communicate with each other or may be independent of each other.

The fluid may be a liquid or a gas, and the temperature adjustment means heating or cooling the plurality of battery cells 20. In a case of lowering the temperature of the battery cell 20, the cavity 501 may accommodate a cooling medium to adjust the temperature of the plurality of battery cells 20. In this case, the fluid may also be called a cooling medium or a cooling fluid, and more specifically, may be called a cooling liquid or a cooling gas. In addition, the fluid may also be used for heating, which is not limited by the embodiments of the present application. Optionally, the fluid may flow in a circulating manner to achieve a better temperature adjustment effect. Optionally, the fluid may be water, a mixture of water and ethylene glycol, a refrigerant, air, or the like.

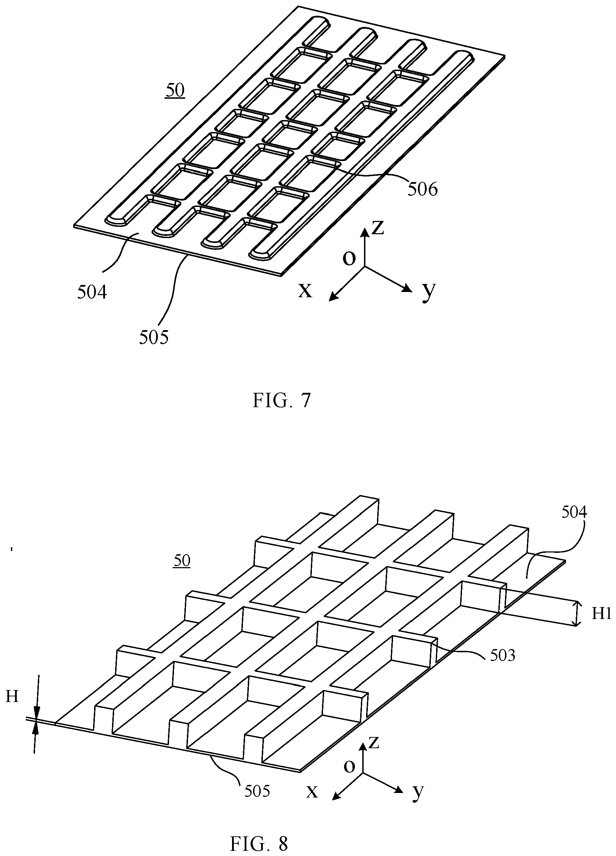

FIG. 7 is a schematic structural diagram of a mounting wall according to an embodiment of the present application. Optionally, as shown in FIG. 7, a mounting wall 50 is provided with a reinforcing part 506. The mounting wall 50 may include a first face 504 and a second face 505, the second face 505 is connected to a first wall 201 of a battery cell 20, and the reinforcing part 506 is disposed on the first face 504 and/or the second face 505, and may enhance the structural strength of the mounting wall 50. Optionally, the reinforcing part 506 may be a protrusion and/or a groove that is formed by being stamped from the mounting wall, which is not limited in the embodiments of the present application.

FIG. 8 is a schematic structural diagram of a mounting wall according to an embodiment of the present application. Optionally, as shown in FIG. 8, in an embodiment of the present application, the battery 10 further includes a reinforcing rib 503, and the reinforcing rib 503 is disposed on a surface of a mounting wall 50 away from a battery cell 20 in a second direction.

As shown in FIG. 8, a surface of the mounting wall 50 away from the battery cell 20 in the second direction may be a first face 504, and the reinforcing rib 503 is provided above the first face 504. The reinforcing rib 503 may enhance the structural strength of the mounting wall 50.

It should be noted that a size of the reinforcing rib 503 in the second direction is H1, and when (H+H1)/H>2, it is only considered that the size H and the weight M of the battery cell 20 satisfy: 0.04mm/kg≤H/M≤100mm/kg. The reinforcing rib 503 may belong to the battery 10, and may also belong to a power consumption device such as a vehicle, and the reinforcing rib 503 may be set according to requirements for the structural strength of the vehicle, and when the size of the reinforcing rib 503 in the second direction is large, the relationship between the size H1 of the reinforcing rib 503 and the weight M of the battery cell 20 is not considered. Viewed from another perspective, when the size H1 of the reinforcing rib 503 is small, for example, when (H+H1)/H≤2, a relationship between (H+H1) and M satisfies: 0.04mm/kg≤(H+H1)/M≤100mm/kg

The number and shape of the reinforcing ribs 503 may be specifically set according to requirements of the power consumption device or arrangement of the battery, which is not specifically limited in the embodiments of the present application.

Optionally, in an embodiment of the present application, the reinforcing rib 503 and the mounting wall 50 are of an integrally formed structure, and in this way, the processing is convenient, which is advantageous in saving the process. In other embodiments, the reinforcing rib 503 and the mounting wall 50 may be separately formed, and are then connected or assembled by means of splicing, welding, bonding, machining, stamping, or the like, which is not specifically limited in the embodiments of the present application.

Optionally, the mounting wall 50 may be of a single-layer plate structure or a multi-layer plate structure. The mounting wall 50 with the multi-layer plate structure has greater rigidity and strength than that of the single-layer plate structure.

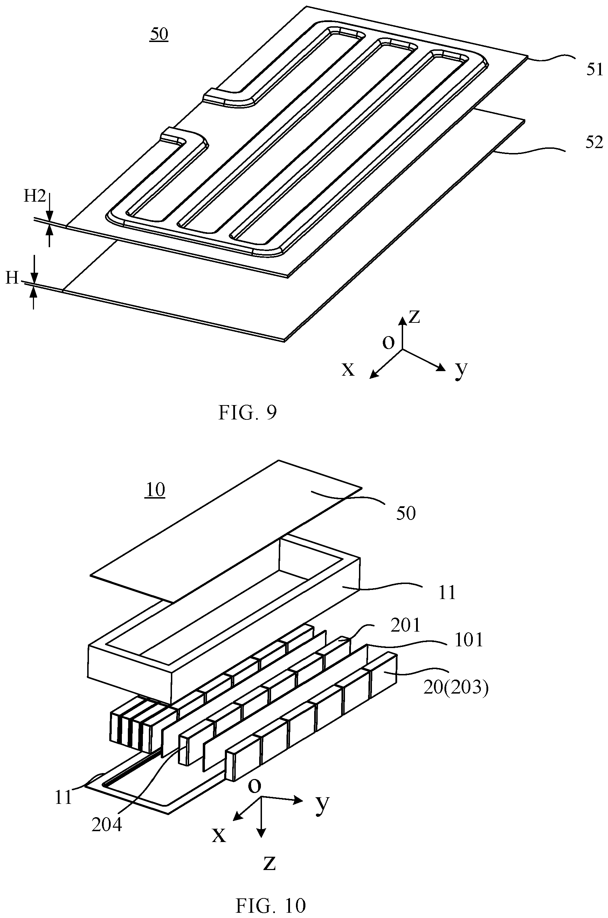

FIG. 9 is a schematic structural diagram of a mounting wall according to an embodiment of the present application. Optionally, as shown in FIG. 9, a mounting wall 50 includes a first plate 51 and a second plate 52, the second plate 52 is connected to a first wall 201 of a battery cell 20, and the first plate 51 is disposed opposite to the second plate 52 in a second direction. The second plate 52 may be a flat plate, and the first plate 51 may be a non-flat plate. The specific setting of the first plate 51 such as, sizes, strength, or the like may be adjusted according to the specific requirements of the power consumption device, which is not limited in the embodiments of the present application. The mounting wall 50 may also include a third plate, a fourth plate, or the like, and the embodiment of the present application does not limit the number of plates included in the mounting wall 50.

In the embodiment shown in FIG. 9, a size H of the mounting wall 50 may be a size of the second plate 52 in the second direction, and a size of the first plate 51 in the second direction is H2, when (H+H2)/H>2, it is only considered that the relationship between H and M satisfies: 0.04mm/kg≤H/M≤100mm/kg. When (H+H2)/H≤2, a relationship between (H+H2) and M satisfies: 0.04mm/kg≤(H+H2)/M≤100mm/kg

Optionally, in an embodiment of the present application, the relationship between the size H of the mounting wall 50 in the second direction and the weight M of the battery cell 20 further satisfies: 0.1mm/kg≤H/M≤20mm/kg. In this way, the battery does not catch fire and explode, and the safety of the battery can be better ensured while satisfying the energy density of the battery 10.

FIG. 10 is a schematic structural diagram of a battery according to an embodiment of the present application. Optionally, as shown in FIG. 10, in an embodiment of the present application, a battery 10 further includes a spacer plate 101, the spacer plate 101 extends in the first direction and is connected to a third wall 203 of each battery cell 20 of the plurality of battery cells 20, the third wall 203 is two opposite walls of the battery cell 20 in a third direction, and the third direction is perpendicular to the first direction and the second direction.

The third wall 203 is adjacent to the first wall 201 and the second wall 201, and the two third walls 203 are disposed opposite to each other in the third direction, where the third direction may be the y-direction.

Optionally, the battery cell 20 may further include two fourth walls 204 that are disposed opposite to each other in the first direction, the fourth wall 204 is adjacent to the first wall 201, the second wall 202, and the third wall 203, where the fourth walls 204 of two adjacent battery cells 20 arranged in the first direction are opposite to each other.

The spacer plate 101 is connected to the third wall 203 of each battery cell 20, such that the spacer plate 101 and the battery cell 20 are connected as a whole, which can improve the structural strength of the battery 10. In this case, no side plate may be provided in the battery 10, and there is no need to provide a structure such as, a beam, or the like, which can greatly improve the space utilization ratio of the interior of the battery 10, and improve the structural strength and the energy density of the battery 10.

Optionally, the third wall 203 may be a wall of the battery cell 20 that has a largest surface area. In this way, connecting strength of the spacer plate 101 and the battery cell 20 can be enhanced. In other embodiments, the third wall 203 may also be a wall of battery cell 20 that has a small surface area, which is not limited in the embodiments of the present application.

Optionally, in an embodiment of the present application, a size of the spacer plate 101 in the third direction is 0.1mm to 100mm. In this way, it is possible to give consideration to the strength of the spacer plate 101 as well as the energy density of the battery 10.

Optionally, an inner portion of the spacer plate 101 is provided with a cavity structure, and the cavity structure may be configured to provide an expansion space for the battery cell 20, and may also serve as a flow channel to accommodate a fluid to adjust a temperature of the battery cell. Optionally, an inner portion of the cavity structure may be provided with a structural reinforcing member, which can not only enhance the strength of the spacer plate 101 but also form a plurality of flow channels.

Optionally, the spacer plate 101 may be a metallic spacer plate, and in this case, a surface of the spacer plate 101 is provided with an insulating layer, and the insulating layer may be an insulating film or insulating varnish.

Optionally, the spacer plate 101 is a non-metallic spacer plate, that is, the spacer plate 101 is a non-metallic insulating plate.

Optionally, in an embodiment of the present application, the battery 10 includes multiple columns of the plurality of battery cells 20 arranged in the first direction and a plurality of spacer plates 101, where the multiple columns of the battery cells 20 and the plurality of spacer plates 101 are alternately disposed in the third direction. In this way, the multiple columns of the battery cells 20 and the plurality of spacer plates 101 are connected to each other as a whole, and accommodated in a box, which can further ensure the overall structural strength of the battery 10, and improve the performance of the battery.

The multiple columns of the battery cells 20 and the plurality of spacer plates 101 are alternately arranged in the third direction, where in the third direction, they may be arranged in a manner of a battery cell-a spacer plate-a battery cell, or in a manner of a spacer plate-a battery cell-a spacer plate.

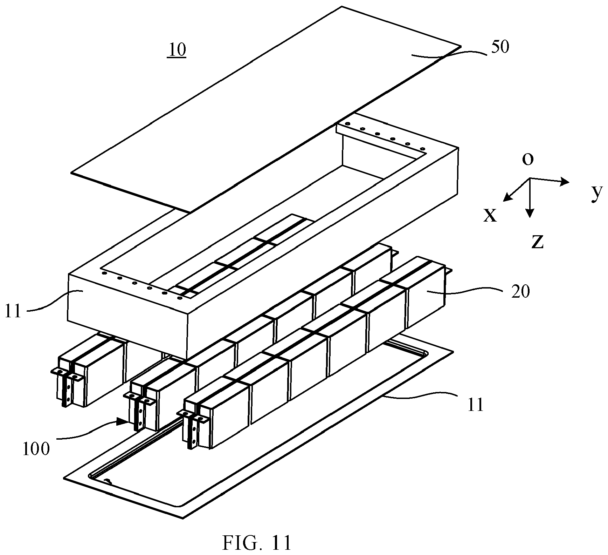

FIG. 11 is a schematic structural diagram of a battery according to an embodiment of the present application. Optionally, as shown in FIG. 11, in an embodiment of the present application, a battery 10 includes a plurality of battery modules 100, a battery module 100 includes at least one column of the plurality of battery cells 20 arranged in the first direction and at least one spacer plate 101, and the at least one column of the battery cells 20 and the at least one spacer plate 101 are alternately disposed in the third direction.

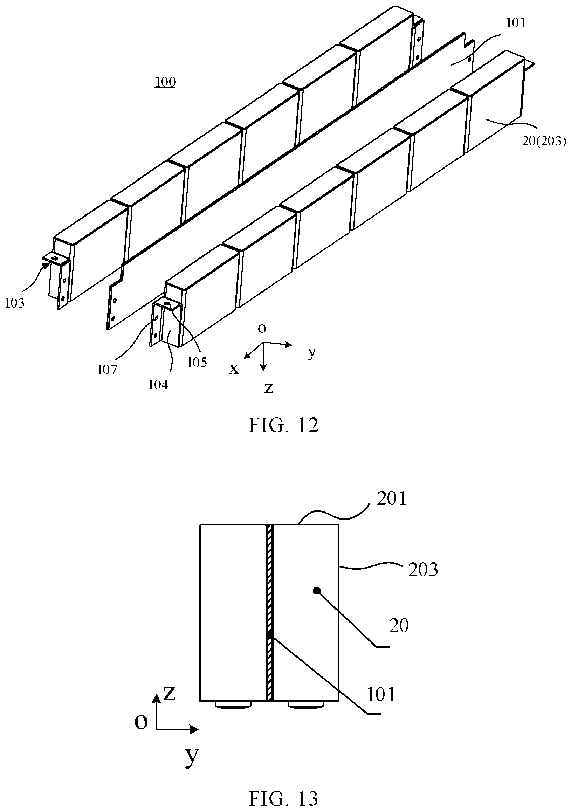

FIG. 12 is a schematic diagram of a battery module according to an embodiment of the present application. Optionally, as shown in FIG. 12, in an embodiment of the present application, a battery module 100 includes N columns of the battery cells 20 and N-1 spacer plate(s) 101, the spacer plate 101 is disposed between two adjacent columns of the battery cells 20, and N is an integer greater than 1, and in FIG. 12, N is 2. In this way, the number of spacer plates 101 can be reduced, and the energy density of the battery 10 can be improved.

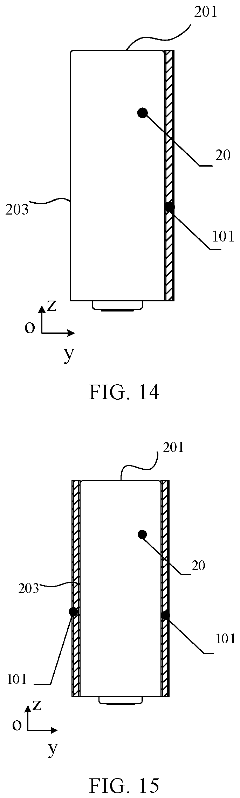

FIG. 13 is a schematic diagram of mating of a battery cell with a spacer plate according to an embodiment of the present application, and FIG. 14 is a schematic diagram of mating of a battery cell with a spacer plate according to an embodiment of the present application. In the y-direction, in FIG. 13, the number of spacer plates 101 is less by one than the number of columns of the battery cells 20, and in FIG. 14, the number of spacer plates 101 is equal to the number of columns of the battery cells 20. FIG. 15 is a schematic diagram of mating of a battery cell with a spacer plate according to an embodiment of the present application. As shown in FIG. 15, in the y-direction, the number of the spacer plate 101 is greater by one than the number of columns of the battery cells 20.

Optionally, the battery module 100 may include N columns of the battery cells 20 and N+1 spacer plates 101, a spacer plate 101 is disposed between two adjacent columns of the battery cells 20, and N is an integer greater than 1. Optionally, the battery module 100 having different arrangements of the battery cell 20 and the spacer plate 101 may be combined with each other to form the battery 10.

Optionally, in an embodiment of the present application, the plurality of battery modules 100 are arranged in the third direction, and a gap exists between adjacent battery modules 100, and in this case, an expansion space may be provided for the battery cell 20.

Optionally, in an embodiment of the present application, an end portion of the spacer plate 101 in the first direction is provided with a fixing structure 103, and the spacer plate 101 is fixed to the mounting wall 50 via the fixing structure 103. The fixing structure 103 may be directly connected to the mounting wall 50, or may also be connected to a side wall of a box 11 and further connected to the mounting wall 50. In this way, each battery cell 20 is fixed to the mounting wall 50 by the spacer plate 101 and the fixing structure 103, and in this way, the fixed connection between the battery cell 20 and the mounting wall 50 is enhanced, and the entire battery 10 is connected as a whole, thereby improving the structural strength of the battery 10.

Optionally, the fixing structure may include a fixing plate 104. The fixing plate 104 is fixedly connected to an end portion of the spacer plate 101, and is fixedly connected to the battery cell 20 located at the end portion of the spacer plate 101. For example, for a cuboid-shaped battery cell 20, the fixing plate 104 may be vertically connected to the spacer plate 101, and the fixing plate 104 and the spacer plate 101 may be connected to two adjacent side walls of the cuboid-shaped battery cell 20, respectively, thereby further enhancing the fixing effect of the battery cell 20.

Optionally, the fixing plate 104 may be made of the same material as the spacer plate 101, for example, metal, plastic or composite materials. A thickness of the fixing plate 104 may be the same as that of the spacer plate 101. The material or thickness of the fixing plate 104 may also be different from that of the spacer plate 101. For example, the fixing plate 104 may be configured with higher strength or thickness, but this is not limited in the embodiments of the present application.

Optionally, a connection manner between the spacer plate 101 and the fixing plate 104 may be resistance welding, resistance riveting, SPR riveting, locking bolts, or clamping. The fixing plate 104 may also be fixed to the mounting wall 50 by means of connection such as resistance welding, resistance riveting, SPR riveting, locking bolts, or clamping, but this is not limited in the embodiments of the present application.

Optionally, the fixing plate 104 and the battery cell 20 may be fixedly connected by means of bonding, for example, they may be bonded by a structural adhesive, but this is not limited in the embodiments of the present application.

Optionally, the fixing plate 104 includes a first connecting part 105 formed by extending in the first direction away from the battery cell 20, and the first connecting part 105 is configured to be connected to the mounting wall 50. For example, taking connecting a second face 505 of the mounting wall 50 as an example, at a position where the fixing plate 104 is close to the second face 505, the first connecting part 105 may be formed in a direction away from the battery cell 20, that is, extending outward, and the fixing plate 104 is connected to the second face 505 via the first connecting part 105.

The first connecting part 105 may be parallel to the second face 505 of the mounting wall 50, and an area of the first connecting part 105 may be set according to a fixing manner of a side wall of the box connected thereto to achieve the required fixing effect.

Optionally, the first connecting part 105 may be formed by bending the fixing plate 104. For example, the first connecting part 105 may be formed by bending an edge of the fixing plate 104 close to the second face 505 in a direction away from the battery cell 20. For example, an upper edge of the fixing plate 104 may be bent outward to form the first connecting part 105. In this way, the first connecting part 105 and a main body of the fixing plate 104 are of an integral structure, and thus the connecting performance could be enhanced.

Optionally, in an embodiment of the present application, the fixing plate 104 further includes a second connecting part 107 formed by extending in the first direction away from the battery cell 20, and the second connecting part 107 is configured to connect the fixing plate 104 and the spacer plate 101. For example, at a position where the fixing plate 104 is connected to the spacer plate 101, the second connecting part 107 may be formed in a direction away from the battery cell 20, that is, extending outward, and the fixing plate 104 is fixedly connected to the spacer plate 101 via the second connecting part 107.

Optionally, the second connecting part 107 may also implement connection between the fixing plates 104 in addition to the connection of the spacer plate 101. For example, each column of the battery cells 20 is provided with one fixing plate 104, and the spacer plate 101 and the two fixing plates 104 corresponding to two columns of the battery cells 20 are fixed together via the second connecting part 107.

The second connecting part 107 may be parallel to the spacer plate 101. An area of the second connecting part 107 may be set according to a fixing manner to achieve the required fixing effect.

Optionally, in an embodiment of the present application, the spacer plate 101 is bonded to the third wall 203. The spacer plate 101 is fixedly connected to the third wall 203 by means of bonding, which is simple in structure and easy to process and assemble.

Optionally, the spacer plate 101 may also be sandwiched between adjacent columns of the battery cells 20 by abutting against the third walls 203.

Optionally, in an embodiment of the present application, the first wall 201 is bonded to mounting wall 50. This connection manner facilitates installation.

It should be understood that the relevant parts in each embodiment of the present application may be referred to each other, and for the sake of brevity, details are not described herein again.

An embodiment of the present application further provides a power consumption device, and the power consumption device may include the battery 10 in the foregoing embodiments. Optionally, the power consumption device may be a vehicle 1, a ship or a spacecraft, or the like, but this is not limited in the embodiments of the present application.

The battery 10 and the power consumption device of the embodiments of the present application are described above, and a method and device for producing a battery of the embodiments of the present application will be described below. For the parts that are not described in detail, reference is made to the foregoing embodiments.

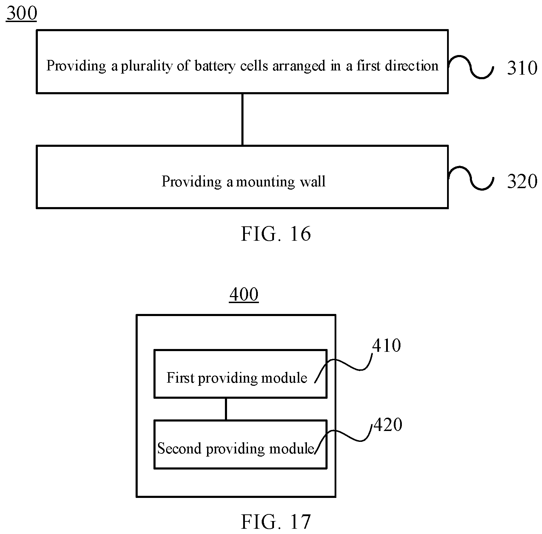

FIG. 16 shows a schematic flowchart of a method 300 for producing a battery according to an embodiment of the present application. As shown in FIG. 9, the method 300 may include the following steps:

310, providing a plurality of battery cells 20 arranged in a first direction; and

320, providing a mounting wall 50, the mounting wall 50 being connected to a first wall 201 of each battery cell 20 of the plurality of battery cells 20, where when the battery cell 20 is disposed in a power consumption device, the battery cell 20 is located below the mounting wall 50, and the mounting wall 50 is configured to mount the battery cell 20; where a relationship between a size H of the mounting wall 50 in a second direction and a weight M of the battery cell 20 satisfies: 0.04mm/kg≤H/M≤100mm/kg, and the second direction is perpendicular to the first wall 201.

FIG. 17 is a schematic block diagram of a device 400 for producing a battery according to an embodiment of the present application. As shown in FIG. 10, the device 400 for producing the battery may include: a first providing module 410 and a second providing module 420.

The first providing module 410 is configured to provide a plurality of battery cells 20 arranged in a first direction.

The second providing module 420 is configured to provide a mounting wall 50, the mounting wall 50 being connected to a first wall 201 of each battery cell 20 of the plurality of battery cells 20, where when the battery cell 20 is disposed in a power consumption device, the battery cell 20 is located below the mounting wall 50, and the mounting wall 50 is configured to mount the battery cell 20; where a relationship between a size H of the mounting wall 50 in a second direction and a weight M of the battery cell 20 satisfies: 0.04mm/kg≤H/M≤100mm/kg, and the second direction is perpendicular to the first wall 201.

Hereinafter, an embodiment of the present application will be described. The examples described below are illustrative, only used to explain the present application, and should not be construed as limitation to the present application. Where specific techniques or conditions are not specified in the embodiments, they are performed according to techniques or conditions described in the literature in the art or according to product specifications.

Test results for different sizes of mounting walls and different weights of battery cells are shown in Table 1.

**Table 1 Test results for different sizes of mounting walls and different weights of battery cells**

| H/mm | M/kg | H/M mm/kg | Test results |
|---|---|---|---|
| 0.2 | 10 | 0.02 | Fire, explosion |
| 0.4 | 8 | 0.05 | No fire, no explosion |
| 0.4 | 1 | 0.4 | No fire, no explosion |
| 1 | 3.5 | 0.286 | No fire, no explosion |
| 5.5 | 1.5 | 3.667 | No fire, no explosion |
| 10 | 2 | 5 | No fire, no explosion |
| 18 | 2 | 9 | No fire, no explosion |

Although the present application is already described with reference to the preferred embodiments, various improvements may be made to the present application and the components therein may be replaced with equivalents without departing from the scope of the present application. In particular, various technical features mentioned in each embodiments can be combined in any manner, as long as there is no structural conflict. The present application is not limited to the specific embodiments disclosed herein, but includes all technical solutions falling within the scope of the claims.

## Claims

1. A battery (10), comprising:
a plurality of battery cells (20) arranged in a first direction; and
a mounting wall (50), the mounting wall (50) being connected to a first wall (201) of each battery cell (20) of the plurality of battery cells (20), wherein when the battery cell (20) is disposed in a power consumption device, the battery cell (20) is located below the mounting wall (50), and the mounting wall (50) is configured to mount the battery cell (20);
wherein a relationship between a size H of the mounting wall (50) in a second direction and a weight M of the battery cell (20) satisfies: 0.04mm/kg≤H/M≤100mm/kg, and the second direction is perpendicular to the first wall (201).

2. The battery (10) according to claim 1, wherein a second wall (202) of the battery cell (20) is provided with an electrode terminal (214), and the second wall (202) and the first wall (201) are separated and disposed opposite to each other in the second direction; or
the second wall (202) is connected to the first wall (201), and the second direction is parallel to the second wall (202).

3. The battery (10) according to claim 1 or 2, wherein the size H of the mounting wall (50) in the second direction is 0.2mm to 20mm.

4. The battery (10) according to any one of claims 1 to 3, wherein an inner portion of the mounting wall (50) is provided with a cavity (501).

5. The battery (10) according to claim 4, wherein the cavity (501) is configured to accommodate a fluid to adjust a temperature of the battery cell (20).

6. The battery (10) according to any one of claims 1 to 5, wherein the battery further comprises a reinforcing rib (503), and the reinforcing rib (503) is disposed on a surface of the mounting wall (50) away from the battery cell (20) in the second direction.

7. The battery (10) according to claim 6, wherein the reinforcing rib (503) and the mounting wall (50) are of an integrally formed structure.

8. The battery (10) according to any one of claims 1 to 7, wherein the relationship between the size H of the mounting wall (50) in the second direction and the weight M of the battery cell (20) further satisfies: 0.1mm/kg≤H/M≤20mm/kg.

9. The battery (10) according to any one of claims 1 to 8, further comprising:
a spacer plate (101), the spacer plate (101) extending in the first direction and being connected to a third wall (203) of each battery cell (20) of the plurality of battery cells (20), the third wall (203) being two opposite walls of the battery cell (20) in a third direction, and the third direction being perpendicular to the first direction and the second direction.

10. The battery (10) according to claim 7, wherein the third wall (203) is a wall of the battery cell (20) that has a largest surface area.

11. The battery (10) according to claim 9 or 10, wherein a size of the spacer plate (101) in the third direction is 0.1mm to 100mm.

12. The battery (10) according to any one of claims 9 to 11, wherein the battery (10) comprises multiple columns of the plurality of battery cells (20) arranged in the first direction and a plurality of spacer plates (101), wherein the multiple columns of the battery cells (20) and the plurality of spacer plates (101) are alternately disposed in the third direction.

13. The battery (10) according to any one of claims 9 to 11, wherein the battery (10) comprises a plurality of battery modules (100), the battery module (100) comprises at least one column of the plurality of battery cells (20) arranged in the first direction and at least one spacer plate (101), and the at least one column of the battery cells (20) and the at least one spacer plate (101) are alternately disposed in the third direction.

14. The battery (10) according to claim 13, wherein the battery module (100) comprises N columns of the battery cells (20) and N-1 spacer plate(s) (101), the spacer plate (101) is disposed between two adjacent columns of the battery cells (20), and N is an integer greater than 1.

15. The battery (10) according to claim 13 or 14, wherein the plurality of battery modules (100) are arranged in the third direction and a gap exists between adjacent battery modules (100).

16. The battery (10) according to any one of claims 9 to 15, wherein an end portion of the spacer plate (101) in the first direction is provided with a fixing structure (103), and the spacer plate (101) is fixed to the mounting wall (50) via the fixing structure (103).

17. The battery (10) according to any one of claims 9 to 16, wherein the spacer plate (101) is bonded to the third wall (203).

18. The battery (10) according to any one of claims 1 to 17, wherein the first wall (201) is bonded to the mounting wall (50).

19. A power consumption device, comprising: the battery (10) according to any one of claims 1 to 18, the battery (10) being configured to provide electric energy.

20. A method (300) for producing a battery, comprising:
providing (310) a plurality of battery cells (20) arranged in a first direction; and
providing (320) a mounting wall (50), the mounting wall (50) being connected to a first wall (201) of each battery cell (20) of the plurality of battery cells (20), wherein when the battery cell (20) is disposed in a power consumption device, the battery cell (20) is located below the mounting wall (50), and the mounting wall (50) is configured to mount the battery cell (20);
wherein a relationship between a size H of the mounting wall (50) in a second direction and a weight M of the battery cell (20) satisfies: 0.04mm/kg≤H/M≤100mm/kg, and the second direction is perpendicular to the first wall (201).

21. A device (400) for producing a battery, comprising:
a first providing module (410), the first providing module being configured to provide a plurality of battery cells (20) arranged in a first direction; and
a second providing module (420), the second providing module being configured to provide a mounting wall (50), the mounting wall (50) being connected to a first wall (201) of each battery cell (20) of the plurality of battery cells (20), wherein when the battery cell (20) is disposed in a power consumption device, the battery cell (20) is located below the mounting wall (50), and the mounting wall (50) is configured to mount the battery cell (20);
wherein a relationship between a size H of the mounting wall (50) in a second direction and a weight M of the battery cell (20) satisfies: 0.04mm/kg≤H/M≤100mm/kg, and the second direction is perpendicular to the first wall (201).
